Europäisches Patentamt

European Patent Office

Office européen des brevets

(11) Veröffentlichungsnummer: **0 273 329 B1**

# EUROPÄISCHE PATENTSCHRIFT

(45) Veröffentlichungstag der Patentschrift: 03.04.91

(51) Int. Cl.⁵: **G11B 5/72, G11B 5/71**

(21) Anmeldenummer: 87118896.7

(22) Anmeldetag: 19.12.87

(54) Verfahren zur Herstellung von scheibenförmigen magnetischen Aufzeichnungsträgern.

(30) Priorität: 31.12.86 DE 3644822

(43) Veröffentlichungstag der Anmeldung:
06.07.88 Patentblatt 88/27

(45) Bekanntmachung des Hinweises auf die
Patenterteilung:
03.04.91 Patentblatt 91/14

(84) Benannte Vertragsstaaten:
**DE FR GB NL**

(56) Entgegenhaltungen:
EP-A- 0 191 323
DE-A- 3 316 693
US-A- 4 411 963
US-A- 4 524 106
US-E- 32 464

PATENT ABSTRACTS OF JAPAN , unexamined applications , Section P, Band 7 , Nr.
290, 24 December 1983 THE PATENT OFFICE
JAPANESE GOVERNMENT Seite 130 P 245

PATENT ABSTRACTS OF JAPAN , unexamined applications , Section E , Band 2 , Nr. 75
, 14 June 1978 THE PATENT OFFICE JAPANE-
SE GOVERNMENT Seite 2962 E 78

(73) Patentinhaber: **BASF Aktiengesellschaft
Carl-Bosch-Strasse 38
W-6700 Ludwigshafen(DE)**

(72) Erfinder: **Hitzfeld, Michael, Dr.
Kalkerdestrasse 20
W-6718 Gruenstadt(DE)**
Erfinder: **Nowak, Uwe, Dr.
Wolfhartsstrasse 14
W-6700 Ludwigshafen(DE)**
Erfinder: **Grau, Werner, Dr.
Tuchbleiche 5
W-6712 Bobenheim-Roxheim(DE)**
Erfinder: **Koch, Volker, Dr.
Am Hipperling 3
W-6719 Battenberg(DE)**
Erfinder: **Koenig, Roland, Dr.
Auf dem Nussbuckel 5
W-7600 Offenburg(DE)**

**Beschreibung**

Die Erfindung betrifft Verfahren zur Herstellung scheibenförmiger magnetischer Aufzeichnungsträger, bestehend aus einem nichtmagnetischen Trägermaterial, einer darauf mindestens einseitig aufgebrachten Magnetschicht auf der Basis eines in einer organischen Bindemittelmatrix feinverteilten magnetischen Materials und einer auf der Oberfläche der Magnetschicht befindlichen reibungsmindernden Schicht.

Die magnetischen Schichten üblicher magnetischer Aufzeichnungsträger bestehen aus in polymeren organischen Bindemitteln feinverteilten magnetischen Materialien, vorwiegend auf der Basis von Eisenoxiden. Aufzeichnungsträger mit solchen Schichten auf scheibenförmigen Trägermaterialien werden in sogenannten Plattenlaufwerken in der Datentechnik eingesetzt. Hierbei fliegen die zur Aufzeichnung und Wiedergabe verwendeten Magnetköpfe in einem Abstand von bis zu 0,2 bis 0,3 μm über der Oberfläche der mit hoher Umdrehungszahl rotierenden scheibenförmigen Aufzeichnungsträger, da sich durch die hohe Relativgeschwindigkeit und die spezielle Kopfform ein Luftpolster zwischen Kopf und Platte bildet, wodurch der Kopf getragen wird. Vor Inbetriebnahme des Gerätes sitzt der Magnetkopf unmittelbar auf der Magnetplatte auf. Ebenso entsteht ein Kopf-Platte-Kontakt nach der Abschaltung des Gerätes. Die Plattenoberfläche muß deshalb so beschaffen sein, daß sie einer großen Anzahl solcher Kopf-Platte-Kontakte ohne Beschädigung standhält. Bei einer für derartige Aufzeichnungsträger geforderten Lebensdauer von mindestens 10 Jahren entspricht dies einer Beanspruchung von 20 000 bis 30 000 Lande- und Startvorgängen des Magnetkopfes auf einer Aufzeichnungsspur. Damit wird deutlich, daß außergewöhnliche Anforderungen an die Magnetschicht hinsichtlich Reibung und Verschleißfestigkeit gestellt werden.

Dies bedeutet, daß die Oberfläche der Magnetschicht eine hervorragende Abriebfestigkeit und Gleitfähigkeit aufweisen muß. Da jedoch die Magnetschichten auf der Basis Bindemittel/magnetisches Material diese Eigenschaften nicht in ausreichendem Maße aufweisen, ist das Aufbringen von dünnen Schutz- und insbesondere von Gleitschichten erforderlich. Solche Gleitschichten werden schon seit langem durch den Auftrag flüssiger Oligomere durch Tauchen oder Aufschleudern hergestellt. Damit läßt sich sowohl der Verschleiß bei den Start-Stop-Operationen reduzieren als auch die statische und dynamische Reibung des Magnetkopfes auf der Plattenoberfläche erniedrigen. Ein solches Vorgehen wird u.a. in der US-PS 3 778 308 angegeben, wonach sich Perfluorpolyether hierfür eignen sollen. Nachteilig an diesem Verfahren ist jedoch, daß das Schmiermittel unter dem Einfluß der Zentrifugalkraft und der Luftströmung beim Betrieb der Aufzeichnungsplatten zunehmend von innen nach außen wandert, so daß unter Abnahme der Schmierfähigkeit der Verschleiß und die Reibung sich gegenseitig beeinflussend lawinenartig anwachsen.

Es wurde auch schon vorgeschlagen, bei Aufzeichnungsträgern mit Polymerschicht in gleicher Weise wie bei magnetischen Aufzeichnungsträgern mit einer homogenen, meist durch Aufdampfen hergestellten Metallschicht, eine Kohlenstoffschutzschicht aufzutragen. An diesem Verfahren ist jedoch die in Abhängigkeit von der organischen Polymerschicht schwierige Reproduzierbarkeit der Ergebnisse als auch die unterschiedliche Struktur der Kohlenstoffschutzschicht nachteilig.

Aufgabe der Erfindung war es daher, Verfahren zur Herstellung scheibenförmiger magnetischer Aufzeichnungsträger mit Magnetschichten auf der Basis von in organischen Bindemitteln feinverteilten magnetischen Materialien und einer auf der Oberfläche der Magnetschicht befindlichen reibungsmindernden, mittels eines DC-Magnetron-Sputterprozesses erzeugten amorphen Kohlenstoffschicht bereitzustellen, bei denen die angegebenen Nachteile nicht auftreten und insbesondere Aufzeichnungsträger erhalten werden, die beim Betrieb eine besonders hohe Lebensdauer erreichen, ohne daß sich die statische und dynamische Reibung verändert oder Signalverluste auftreten.

Es wurde nun überraschenderweise gefunden, daß sich die gestellte Aufgabe lösen läßt, wenn als reibungsmindernde Kohlenstoffschicht in einer Schichtdicke von 5 bis 100 nm durch einen DC-Magnetron-Sputterprozeßes bei einem Reibungs-Korrelatoins-Produkt (RKP-wert) von 2 bis 5 aufgebracht wird.

In einer besonders zweckmäßigen Ausgestaltung der erfindungsgemäßen Verfahren wird die Oberfläche der unbehandelten Magnetschicht vor dem Aufbringen der amorphen Kohlenstoffschicht durch RF/DC-Ätzen vorbehandelt.

Die scheibenförmigen magnetischen Aufzeichnungsträger, die gemäß der vorliegende Erfindung zur Verbesserung der Gebrauchseigenschaften mit einer reibungsmindernden Schicht zu versehen sind, sind bekannt. Sie bestehen aus einem scheibenförmigen Trägermaterial, üblicherweise einer Platte aus einer Aluminiumlegierung, gegebenenfalls auch aus einem flexiblen Träger aus einer Polyethylenterephthalat- oder Polyimidfolie, und einer darauf aufgebrachten Magnetschicht aus einem magnetischen Material, meist auf der Basis von magnetischen Eisenoxiden oder solche vom Typ der Bariumferrite, welches unter Zuhilfenahme von bekannten Zusatzstoffen in einem organischen Bindemittel, vorwiegend aus einem Gemisch von durch Hitze vernetzbaren Polymeren oder Prepolymeren, dispergiert ist. Nach der mechanischen Feinbearbeitung der harten Magnetschicht wird die reibungsmindernde Schicht aufgebracht.

Hierzu wird gemäß den erfindungsgemäßen Verfahren der magnetische Aufzeichnungsträger in die Sputteranlage eingebracht. Innerhalb dieser Vakuumkammer befinden sich Kathode und Anode. Die Anode wird durch das Substrat gebildet. Die Kathode ist mit einer dicken Scheibe aus graphitischem Kohlenstoff, dem Target beklebt. Durch das regelbare Argoneinlaßventil strömt das Sputtergas in die Vakuumkammer bis der gewünschte Sputterdruck eingestellt ist. Das Argongas wird nun mit Elektronen aus einem Glühfaden ionisiert. Mit seiner positiven Ladung wird das Argonion auf das negativ gepolte Target beschleunigt und zerstäubt dort mit seiner kinetischen Energie an der Oberfläche neutrale Kohlenstoffatome, die sich als gesputterte Teilchen auf dem Substrat abscheiden. Dieser einmal gezündete Vorgang wird durch die physikalischen Prozesse innerhalb des Argonplasmas selbst aufrecht erhalten.

Bei der Durchführung dieses erfindungsgemäßen Verfahrens beträgt der RKP-wert zwischen 2 und 5. Der RKP-wert ist defifiniert als das Produkt aus Sputterdruck, beispielsweise den Argon-Partialdruck, in Pascal und der spezifischen Sputterleistung in Watt pro cm², wobei sich die spezifische Sputterleisung aus der angelegten electrischen Leistung am Target in Watt zu Target-Gesamtfläche in cm² ergibt.

Gemäß einer zweckmäßigen Ausgestaltung der erfindungsgemäßen Verfahren wird vor dem Aufbringen der amorphen Kohlenstoffschicht die Oberfläche der unbehandelten Magnetschicht durch RF/DC-Ätzen vorbereitet. Hierbei wird bei einem Sputtergasdruck zwischen $10^{-3}$ und $5.10^{-2}$ mbar beispielsweise eine RF-Leistung von 0,1 bis 1,0 Watt/cm² während 1 bis 5 Minuten angelegt. Da das Substrat ein negatives Potential erhält, wird durch die auf die Magnetschicht auftreffenden Argonatome ein teilweiser, wenn auch geringer Abtrag in der obersten Schicht erreicht. Die abgetragene Schichtdicke beträgt dabei 1 bis 5 nm. An diese Vorbehandlung schließt sich üblicherweise unmittelbar das Aufbringen der Kohlenstoffschicht an. Aufgrund dieses Anätzens der Magnetschichtoberfläche läßt sich die Haftung der Kohlenstoffschicht noch weiter verbessern.

Mit Hilfe der erfindungsgemäßen Verfahren werden scheibenförmige magnetische Aufzeichnungsträger erhalten, die sich durch eine weit überdurchschnittliche Lebensdauer auszeichnen. So zeigen magnetische Aufzeichnungsplatten mit einer vernetzten Polymerschicht, welche nadelförmiges Gamma-Eisen(III)oxid als magnetisches Material enthält, nach dem Aufbringen einer 40 nm dicken amorphen Kohlenstoffschicht eine Lebensdauer von 64 000 Start-Stop-Zyklen ohne jeglichen head-crash, während solche Aufzeichnungsplatten, deren Oberfläche mit handelsüblichen Perfluorpolyethern behandelt werden, bei 10 000 bis 20 000 Start-Stop-Zyklen durch einen head-crash ausfallen und teilweise zerstört werden. Ein weiterer Vorteil der in erfindungsgemäßer Weise behandelten Platten besteht darin, daß die amorphe Kohlenstoffschicht sehr gut haftet und keine Kopfverschmutzungen durch flüssige Schmiermittel die Gebrauchstüchtigkeit nachträglich beeinflussen.

## Ansprüche

1. Verfahren zur Herstellung von scheibenförmigen magnetischen Aufzeichnungsträgern, bestehend aus einem nichtmagnetischen Trägermaterial und einer mindestens einseitig aufgebrachten Magnetschicht auf der Basis eines in einer organischen Bindemittelmatrix feinverteilten magnetischen Materials sowie einer auf der Oberfläche der Magnetschicht befindlichen reibungsmindernden, mittels eines DC-Magnetron-Sputterprozesses erzeugten amorphen Kohlenstoffschicht, dadurch gekennzeichnet, daß die reibungsmindernde Kohlenstoffschicht, in einer Schichtdicke von 5 bis 100 nm durch einen DC-Magnetron-Sputterprozeß bei einem Reibungs-Korrelations-Produkt (RKP-Wert) von 2 bis 5 aufgebracht wird.

2. Verfahren nach Anspruch 1, dadurch gekennzeichnet, daß die Oberfläche der unbehandelten Magnetschicht vor dem Aufbringen der amorphen Kohlenstoffschicht durch Hochfrequenz/Gleichstrom-Ätzen (RF/OC-Ätzen) vorbehandelt wird.

## Claims

1. A process for the production of a disk-shaped magnetic recording medium, consisting of a nonmagnetic base and a magnetic layer which is applied to one or both sides and is based on a magnetic material finely dispersed in an organic binder matrix, and a friction-reducing, amorphous carbon layer present on the surface of the magnetic layer and produced by a DC magnetron sputter process, wherein the friction-reducing carbon layer is applied in a layer thickness of from 5 to 100 nm by a DC magnetron sputter process at a friction correlation product (FCP value) of from 2 to 5.

2. A process as claimed in claim 1, wherein the surface of the untreated magnetic layer is pretreated by radio frequency/direct current etching (RF/DC etching) prior to application of the amorphous carbon layer.

**Revendications**

1. Procédé de préparation de supports d'enregistrement magnétigues en forme de disques, constitués d'un matériau support non magnétique et d'une couche magnétique, appliguée au moins d'un côté, à base d'un matériau magnétique finement réparti dans une matrice de liant organique ainsi que d'une couche de carbone amorphe, obtenue au moyen d'un processus de pulvérisation magnétron -DC, réduisant le frottement et se trouvant sur la surface de la couche magnétique caractérisé par le fait que la couche de carbone réduisant le frottement est appliqué en une couche d'épaisseur de 5 à 100 nm par un processus de pulvérisation magnétron DC avec un produit-corrélationfrottement (valeur P.C.F.) de 2 à 5.

2. Procédé selon la revendication 1, caractérisé par le fait que la surface de la couche magnétique non traitée est, avant l'application de la couche de carbone amorphe, prétraitée par décapage haute fréquence/courant continu (décapage RF/DC).